Europäisches Patentamt

European Patent Office

Office européen des brevets

(11) Veröffentlichungsnummer: **0 330 232**
**A2**

(12) # EUROPÄISCHE PATENTANMELDUNG

(21) Anmeldenummer: **89103309.4**

(22) Anmeldetag: **24.02.89**

(51) Int. Cl.⁴: **A47J 31/54 , A47J 27/00**

(30) Priorität: **25.02.88 DE 8802484 U**

(43) Veröffentlichungstag der Anmeldung:
**30.08.89 Patentblatt 89/35**

(84) Benannte Vertragsstaaten:
**AT BE CH DE ES FR GB GR IT LI LU NL SE**

(71) Anmelder: **FRISMAG AG**
**Fehlwiesstrasse 12**
**CH-8580 Amriswil(CH)**

(72) Erfinder: **Eugster, Markus**
**Amriswiler Strasse 102**
**CH-8590 Romanshorn(CH)**

(74) Vertreter: **Patentanwälte Grünecker,**
**Kinkeldey, Stockmair & Partner**
**Maximilianstrasse 58**
**D-8000 München 22(DE)**

(54) **Einrichtung zum Andrücken einer Heizeinrichtung an den Boden eines elektrischen Haushaltsgeräts.**

(57) Einrichtung zum Andrücken einer strangartigen, sich in einer Ebene erstreckenden elektrischen Heizeinrichtung an den zu beheizenden Boden eines elektrischen Haushaltsgeräts, mit der Besonderheit, daß sie einen im wesentlichen U-förmigen Drahtbügel umfaßt, dessen Scheitel und dessen Enden von mit dem Boden des Haushaltsgeräts verbundenen Halteeinrichtungen abgestützt sind und dessen Schenkel den genannten Boden sehnenartig überspannen und an der dem genannten Boden abgewandten Seite der Heizeinrichtung unter Vorspannung anliegen.

FIG.3

EP 0 330 232 A2

## Einrichtung zum Andrücken einer Heizeinrichtung an den Boden eines elektrischen Haushaltsgeräts

Die Erfindung bezieht sich auf eine Einrichtung zum Andrücken einer strangartigen, sich in einer Ebene erstreckenden elektrischen Heizeinrichtung an den zu beheizenden Boden eines elektrischen Haushaltsgeräts.

Haushaltsgeräte der genannten Art sind beispielsweise Kaffeemaschinen, Eierkocher, Wasserkocher, Babykostwärmer und Warmhalteplatten. Als Heizeinrichtungen für solche Geräte sind strangförmige Heizer bekannt, die aus einem extrudierten Rohr bestehen, in das in einem wärmeleitenden Isoliermaterial ein Widerstandsheizkörper eingebettet ist. Bei Heizeinrichtungen, die in Kaffeefiltermaschinen Einsatz finden, besteht dieser Strang aus zwei Rohren, die integral koextrudiert sind und von denen das eine den schon erwähnten Heizer aufnimmt, während das andere für den Durchlauf von Wasser bestimmt ist. Diese strangartige Heizeinrichtung ist in aller Regel schlangen- oder ringförmig gebogen und muß in gutem Wärmekontakt mit dem zu beheizenden Boden des betreffenden Haushaltsgeräts stehen.

Zur Sicherstellung einer guten gegenseitigen Berührung, die den Wärmeübergang zwischen der Heizeinrichtung und dem Boden des Haushaltsgeräts fördert, ist es bekannt, die Heizeinrichtung in dem Gerät mittels eines Blechstreifens zu sichern, der mit dem Boden oder einem Gehäuseteil des Geräts verschraubt ist. Da Heizeinrichtungen der genannten Art in unterschiedlichen Dicken angeboten werden, muß, wenn unterschiedliche Heizeinrichtungen verwendbar sein sollen, diesem Umstand bei der Gestaltung des Gerätes und der Blechstreifen entsprechend Rechnung getragen werden. Dies kann die Gerätegestaltung kompliziert machen und bedingt auch eine entsprechend aufwendigere Lagerhaltung beim Gerätehersteller. Außerdem erfordert die Montage viele Handgriffe und den Einsatz vieler Einzelteile, wie Schrauben, Beilagscheiben, zugehöriger Werkzeuge und dergleichen. Dies vergrößert die Herstellungskosten eines solchen Haushaltsgeräts.

Der Erfindung liegt die Aufgabe zugrunde, eine Einrichtung der eingangs genannten Art anzugeben, die technisch einfacher und billiger ist und mit weniger Einzelteilen auskommt und eine einfache Montage ermöglicht.

Diese Aufgabe wird durch die kennzeichnenden Merkmale des Anspruchs 1 gelöst. Vorteilhafte Ausgestaltungen der Erfindung sind Gegenstand der Unteransprüche.

Wesentliches Element der Erfindung ist ein U-förmiger Drahtbügel, vorzugsweise aus Federstahldraht, der den Boden des Gerätes sehnenartig überspannt und der mit seinem Scheitel und den beiden gegenüberliegenden Enden an dem Gerät verankert ist und die Heizeinrichtung gegen den Boden des Gerätes drückt. Aufgrund der Federungseigenschaften des Bügels und bei passender Formgestaltung ist es nicht notwendig, daß zur Sicherung des Bügels in seiner Stellung zusätzliche Bauelemente, wie beispielsweise Schrauben oder dergleichen verwendet werden müssen. Die Halteeinrichtungen, an denen der Bügel in dem Gerät verankert ist, sind vorzugsweise von Durchbrüchen gebildet, die beispielsweise in einem Bund ausgebildet sind, der einstückig mit dem Boden ausgebildet ist, oder in einem anderen Teileelement des Gerätes ausgebildet sind, beispielsweise dem Gerätegehäuse, das mit dem Boden verbunden ist. Es kann dann der Bügel durch elastische Verformung mit seinem Scheitel und seinen beiden Enden in diese Ausnehmungen eingeführt werden und hält sich dann in ihnen selbst, ohne zu verrutschen. Entsprechende abgewinkelte oder abgekröpfte Abschnitte an dem Bügel können zusätzlich Sicherungseinrichtungen bilden, die ein Verrutschen des Bügels verhindern.

Die Erfindung wird nachfolgend unter Bezugnahme auf die Zeichnungen näher erläutert. Es zeigt:

Fig. 1 im Schnitt eine Teilansicht eines Haushaltsgeräts mit einer Einrichtung nach der Erfindung;

Fig. 2 eine Ansicht des Geräts nach Fig. 1 von unten, und

Fig. 3 eine ausschnittsweise Darstellung eines Geräts zur Erläuterung der Adaptierbarkeit der erfindungsgemäßen Einrichtung an unterschiedliche Dicken der Heizeinrichtung.

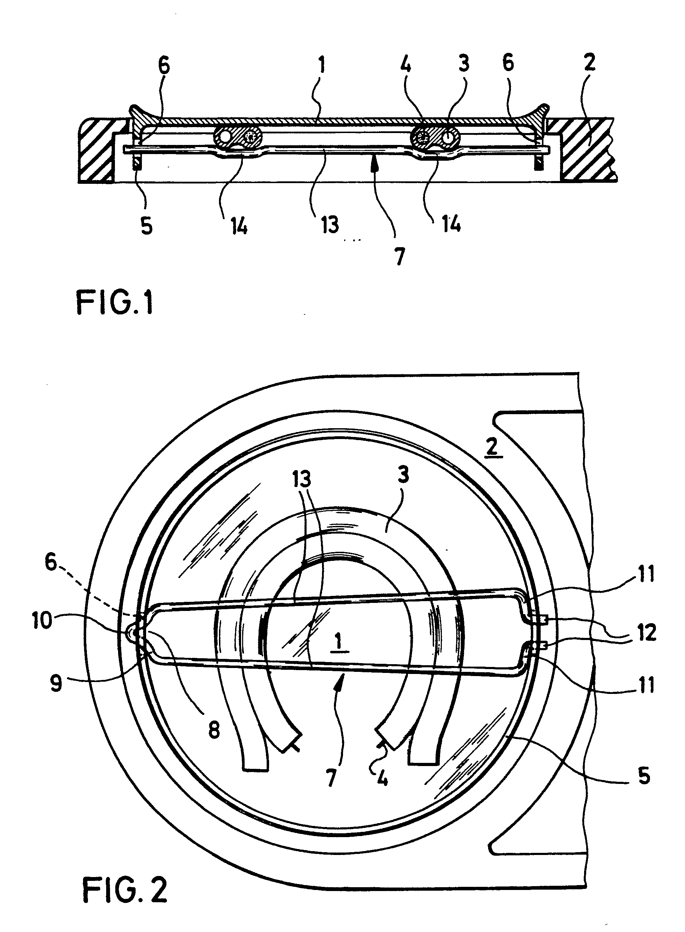

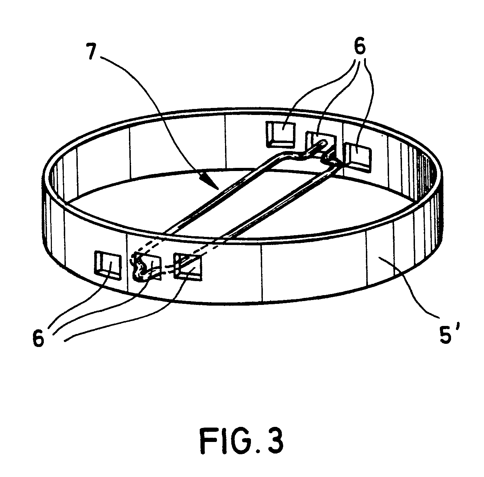

Man erkennt in Fig. 1 im Axialschnitt den unteren Bereich eines elektrischen Haushaltsgeräts, beispielsweise einer Kaffeefiltermaschine, und zwar den Bereich der Warmhalteplatte für ein den gefilterten Kaffee aufnehmendes Gefäß. Eine Warmhalteplatte 1 aus Metall von kreisförmiger Gestalt ist in einem Durchbruch eines Gehäuses 2 angeordnet, das in Fig. 1 nur andeutungsweise dargestellt ist. An der Unterseite der Warmhalteplatte 1 befindet sich eine ebene, strangartige Heizeinrichtung 3, die gemäß Fig. 2 in eine etwa ringförmige Gestalt gebogen ist. Diese Heizeinrichtung 3 besteht aus zwei koextrudierten Rohren, von denen das eine Rohr einen Wasserdurchlaufkanal bildet, während das andere Rohr ein elektrisches Widerstandsheizelement 4 aufnimmt.

Die Heizplatte 1 ist im vorliegenden Falle mit einem sich nach unten erstreckenden zylindrischen Bund 5 versehen, in welchem an zwei diametral gegenüberliegenden Stellen jeweils ein Durchbruch 6 ausgebildet ist. Quer über die Unterseite der Heizplatte 1 erstreckt sich ein im wesentlichen U-förmiger Federstahldrahtbügel 7, dessen Scheitel 8 beidseitig abgekröpfte Abschnitte 9 aufweist, die sich gegeneinander erstrecken und in einen U-förmigen Vorsprung 10 übergehen, der in dem einen Durchbruch 6 im Bund 5 sitzt. An den gegenüberliegenden beiden Enden weist der Drahtbügel 7 ebenfalls zwei abgekröpfte Abschnitte 11 auf, die in Richtung zueinander verlaufen und jeweils in sich von dem Scheitel 8 weg erstreckenden Endabschnitten 12 enden. Diese Endabschnitte 12 sitzen in dem anderen, diametral gegenüberliegenden Durchbruch 6. Die Federvorspannung des Bügels 7 spreizt die beiden Enden 12 auseinander, die abgekröpften Abschnitte 9 und 11 sichern den Bügel 7 in der dargestellten Position.

Die beiden Schenkel 13 des Bügels 7 kreuzen die strangartige Heizeinrichtung 3 und liegen an dieser mit Vorspannung an. Vorzugsweise weisen die beiden Schenkel 13 im Bereich der Kreuzungsstellen mit der Heizeinrichtung 3 Ausbauchungen 14 auf, die dazu beitragen können, die Heizeinrichtung 3 in ihrer Stellung zu sichern.

Zur Anbringung der Heizeinrichtung 3 an der Unterseits der Warmhalteplatte 1, die den zu beheizenden Boden des Geräts bildet, braucht die Heizeinrichtung 3 nur auf die Unterseite der Warmhalteplatte 1 aufgelegt zu werden, der Bügel 7 wird mit seinen beiden Endabschnitten 12 in den einen Durchbruch 6 eingeführt, in einer von der Heizeinrichtung 3 wegweisenden, senkrecht zur Warmhalteplatte 1 verlaufenden Richtung durchgebogen, um ihren Vorsprung 10 am Scheitel 8 in den anderen Durchbruch 6 einführen zu können, und dann losgelassen. Er spannt dann die Heizeinrichtung 3 an der Unterseite der Warmhalteplatte 1 fest.

Es versteht sich, daß der Bügel 7 auch an anderer Stelle im Gerät gesichert werden kann. Figur 1 zeigt auch, daß mit Hilfe des genannten Bügels zugleich auch die Warmhalteplatte 1 in dem Gerätegehäuse gesichert werden kann, wenn der Vorsprung 10 und die beiden Endabschnitte 12 entsprechend verlängert sind und an dem Gerätegehäuse geeignete Vorsprünge zur Anlage an den genannten Bügelteilen ausgebildet sind.

Figur 3 zeigt, wie unterschiedlichen Dicken der Heizeinrichtung 3 Rechnung getragen werden kann. In einem zylindrischen Teil 5', das Bestandteil der genannten Warmhalteplatte nach Art des Bundes 5 in Fig. 1, aber auch ein anderes Teil des Gerätes sein kann, sind mehrere Durchbrüche 6 in unterschiedlichen Höhen an jeweils einander diametral gegenüberliegenden Stellen ausgebildet. Gegebenenfalls reicht es auch aus, wenn auf einer Seite nur ein solcher Durchbruch ausgebildet ist, während auf der gegenüberliegenden Seite in enger Nachbarschaft zueinander mehrere Durchbrüche in unterschiedlichen Höhen ausgebildet sind. Je nach Dicke der Heizeinrichtung wird der Drahtbügel 7 in einen dazu passenden der Durchbrüche 6 eingesteckt. Der Übersichtlichkeit halber sind in Fig. 3 die Heizeinrichtung und der davon zu beheizende Boden nicht dargestellt.

## Ansprüche

1. Einrichtung zum Andrücken einer strangartigen, sich in einer Ebene erstreckenden elektrischen Heizeinrichtung an den zu beheizenden Boden eines elektrischen Haushaltsgeräts, dadurch **gekennzeichnet,** daß sie einen im wesentlichen U-förmigen Drahtbügel (7) umfaßt, dessen Scheitel (8) und dessen Enden (12) von mit dem Boden (1) des Haushaltsgeräts verbundenen Halteeinrichtungen (6) abgestützt sind und dessen Schenkel (13) den genannten Boden (1) sehnenartig überspannen und an der dem genannten Boden (1) abgewandten Seite der Heizeinrichtung (3) unter Vorspannung anliegen.

2. Einrichtung nach Anspruch 1, dadurch **gekennzeichnet,** daß die Halteeinrichtungen (6) als Durchbrüche in einem Bund (5) ausgebildet sind, der einstückig mit dem Boden (1) ausgebildet ist.

3. Einrichtung nach Anspruch 1, dadurch **gekennzeichnet,** daß die Halteeinrichtungen (6) als Durchbrüche in einem Teilelement des Haushaltsgeräts ausgebildet sind, das mit dem Boden (1) verbunden ist.

4. Einrichtung nach Anspruch 3, dadurch **gekennzeichnet,** daß das Teilelement ein Gehäuseteil ist.

5. Einrichtung nach einem der vorhergehenden Ansprüche, dadurch **gekennzeichnet,** daß der Scheitel (8) des Drahtbügels (7) zwei in Richtung aufeinander zu verlaufende, mit den Schenkeln (13) des Drahtbügels (7) verbundene Abschnitte (9) aufweist, von welchen ausgehend sich ein die vorgenannten Abschnitte (9) miteinander verbindender, U-förmiger Vorsprung (10) erstreckt.

6. Einrichtung nach einem der vorhergehenden Ansprüche, dadurch **gekennzeichnet,** daß die Enden der Schenkel (13) des Drahtbügels (7) jeweils einen ersten abgewinkelten Abschnitt (11) aufweisen, die aufeinander zu verlaufen, und jeweils einen davon abgewinkelten Endabschnitt (11) aufweisen, die zueinander etwa parallel verlaufen und sich von dem Scheitel (8) weg erstrecken.

7. Einrichtung nach einem der vorhergehenden Ansprüche, dadurch **gekennzeichnet,** daß der Drahtbügel (7) aus Federstahl besteht.

8. Einrichtung nach einem der vorhergehenden Ansprüche, dadurch **gekennzeichnet,** daß die Schenkel (13) des Drahtbügels (7) im Bereich der Berührungsstellen mit der Heizeinrichtung (3) Ausbauchungen (14) zur Aufnahme derselben aufweisen.

9. Einrichtung nach einem der vorhergehenden Ansprüche, dadurch **gekennzeichnet,** daß der Boden (1) mittels des Drahtbügels (7) in dem Gerätegehäuse (2) gehalten ist.

FIG.1

FIG.2

FIG. 3